(19) Europäisches Patentamt
European Patent Office
Office européen des brevets

(11) **EP 2 122 899 B1**

(12) **EUROPEAN PATENT SPECIFICATION**

(45) Date of publication and mention
of the grant of the patent:
**05.10.2011 Bulletin 2011/40**

(51) Int Cl.:
*H04L 9/30* (2006.01)       *H04L 9/28* (2006.01)
*G06F 7/72* (2006.01)       *G06F 7/535* (2006.01)

(21) Application number: **08733546.9**

(22) Date of filing: **06.03.2008**

(86) International application number:
**PCT/CA2008/000442**

(87) International publication number:
**WO 2008/106790 (12.09.2008 Gazette 2008/37)**

(54) **INTEGER DIVISION IN A MANNER THAT COUNTERS A POWER ANALYSIS ATTACK**

GANZZAHLIGE DIVISION GEGEN EINEN LEISTUNGSANALYSEANGRIFF

DIVISION ENTIÈRE D'UNE FAÇON QUI CONTRE UNE ATTAQUE PAR ANALYSE DE CONSOMMATION

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **06.03.2007 US 893297 P**
**29.02.2008 US 40231**

(43) Date of publication of application:
**25.11.2009 Bulletin 2009/48**

(73) Proprietor: **RESEARCH IN MOTION LIMITED**
**Waterloo, Ontario N2L 3W8 (CA)**

(72) Inventor: **EBEID, Nevine Maurice Nassif**
**Kitchener, Ontario N2A 4C4 (CA)**

(74) Representative: **Patel, Binesh**
**Barker Brettell LLP**
**100 Hagley Road**
**Edgbaston**
**Birmingham**
**B16 8QQ (GB)**

(56) References cited:
EP-A2- 1 515 224          WO-A2-03/069462
US-A1- 2003 212 729       US-A1- 2006 133 603
US-A1- 2007 192 864       US-B1- 6 748 410

• JOYE M ET AL: "A protected division algorithm" PROCEEDINGS OF THE CARDIS '02, FIFTH SMART CARD RESEARCH AND ADVANCED APPLICATION CONFERENCE : NOVEMBER 21 - 22, 2002, SAN JOSE, CALIFORNIA, USA / USENIX ASSOCIATION AND IFIP WG 8.8,, 21 November 2002 (2002-11-21), XP007912766 ISBN: 978-1-931971-04-1
• CAVANAGH J J F: "Digital Computer Arithmetic: Design and Implementation - Chapter 4: Fixed Point Restoring Division" DIGITAL COMPUTER ARITHMETIC, XX, XX, 1 January 1984 (1984-01-01), pages I-II,236, XP002389578
• WU Y. ET AL.: 'A New Dual-Field Elliptic Curve Cryptography Processor' 2006 IEEE INTERNATIONAL SYMPOSIUM ON CIRCUITS AND SYSTEMS (ISCAR 2006) pages 305 - 308, XP010938412

**Description**

**FIELD OF THE INVENTION**

The present application relates generally to cryptography and, more specifically, to performing an integer division in a manner that counters a power analysis attack.

**BACKGROUND OF THE INVENTION**

Cryptography is the study of mathematical techniques that provide the base of secure communication in the presence of malicious adversaries. The main goals of secure communication include confidentiality of data, integrity of data and authentication of entities involved in a transaction. Historically, "symmetric key" cryptography was used to attempt to meet the goals of secure communication. However, symmetric key cryptography requires entities to exchange secret keys through a secret channel prior to communication. One weakness of symmetric key cryptography is the security of the secret channel. Public key cryptography provides a means of securing a communication between two entities without requiring the two entities to exchange secret keys through a secret channel prior to the communication. An example entity "A" selects a pair of keys: a private key that is only known to entity A and is kept secret; and a public key that is known to the public. If an example entity "B" would like to send a secure message to entity A, then entity B needs to obtain an authentic copy of entity A's public key. Entity B encrypts a message intended for entity A by using entity A's public key. Accordingly, only entity A can decrypt the message from entity B.

For secure communication, it is essential that entity A select the pair of keys such that it is computationally infeasible to compute the private key given knowledge of the public key. This condition is achieved by the difficulty (technically known as "hardness") of known mathematical problems such as the known integer factorization mathematical problem, on which is based the known RSA algorithm, which was publicly described in 1977 by Ron Rivest, Adi Shamir and Leonard Adleman.

Elliptic curve cryptography is an approach to public key cryptography based on the algebraic structure of elliptic curves over finite mathematical fields. An elliptic curve over a finite field, $K$, may be defined by a Weierstrass equation of the form

$$y^2 + a_1 xy + a_3 y = x^3 + a_2 x^2 + a_4 x + a_6. \qquad (0.1)$$

If $K = F_p$, where $p$ is greater than three and is a prime, equation (0.1) can be simplified to

$$y^2 = x^3 + ax + b. \qquad (0.2)$$

If $K = F_{2^m}$, i.e., the elliptic curve is defined over a binary field, equation (0.1) can be simplified to

$$y^2 + xy = x^3 + ax^2 + b. \qquad (0.3)$$

The set of points on such a curve (i.e., all solutions of the equation together with a point at infinity) can be shown to form an abelian group (with the point at infinity as the identity element). If the coordinates $x$ and $y$ are chosen from a large finite field, the solutions form a finite abelian group.

Elliptic curves cryptosystems rely on the hardness of a problem called the elliptic curve discrete logarithm problem (ECDLP). Where $P$ is a point on an elliptic curve $E$ and where the coordinates of $P$ belong to a finite field, the scalar multiplication $kP$, where $k$ is a secret integer, gives a point $Q$ equivalent to adding the point $P$ to itself k times. It is computationally infeasible, for large finite fields, to compute $k$ knowing $P$ and $Q$. The ECDLP is: find $k$ given $P$ and $Q$ (=$kP$).

**BRIEF DESCRIPTION OF THE DRAWINGS**

Reference will now be made to the drawings, which show by way of example, embodiments of the invention, and in which:

FIG. 1 illustrates example steps in an expanded Elliptic Curve Scalar Multiplication (ECSM) operation according to one embodiment, the example steps including a step of determining new key-splitting parameters from previous key splitting parameters;

FIG. 2 illustrates steps in an example method for the step, in FIG. 1, of determining new key-splitting parameters for an Additive Splitting Using Division scheme;

FIG. 3A illustrates initial steps in an example method for the step, in FIG. 2, of performing an integer division operation while determining new key-splitting parameters for a Multiplicative Splitting scheme;

FIG. 3B illustrates final steps in the example method of FIG. 3A; and

FIG. 4 illustrates an apparatus for carrying out the method of FIG. 1.

## DETAILED DESCRIPTION OF THE EMBODIMENTS

In operation, a device implementing an Elliptic Curve Cryptosystem selects a value for a secret, or private, key, $k$, which may be a long term secret key or a short term secret key. Additionally, the device has access to a "base point", $P$. The device then generates $Q = kP$ and publishes $Q$ as a public key. $Q$ may then be used for encryption or may then be used in a key agreement protocol such as the known Elliptic Curve Diffie-Hellman (ECDH) key agreement protocol.

In the known Elliptic Curve Menezes-Qu-Vanstone (ECMQV) key agreement protocol, $Q = kP$ is not known as public key as in the ECDH key agreement protocol. In the ECMQV key agreement protocol and the known Elliptic Curve Digital Signature Algorithm (ECDSA), each entity has a (public key, private key) pair, say for entity A, this pair is ($d_A$, $Q_A$). This is long term pair, hence $Q_A = d_A P$ is computed once per key life. Notably, in another step of the ECMQV key agreement protocol and the ECDSA, there is a random integer $k$, selected by the signing entity in the ECDSA or both entities separately in the ECMQV, that is multiplied by the point $P$, i.e., $kP$ is determined.

The general point of an attack on a cryptosystem is to determine the value of the private key, $k$. Recently, especially given the mathematical difficulty of solving the ECDLP, cryptosystem attacks have been developed that are based on careful measurements of the physical implementation of a cryptosystem, rather than theoretical weaknesses in the algorithms. This type of attack is called a "side channel attack". In one known example side channel attack, a measurement of the exact amount of time taken by known hardware to encrypt plain text has been used to simplify the search for a likely private key. Other examples of side channel attacks involve measuring such physical quantities as power consumption, electromagnetic leaks and sound. Many side channel attacks require considerable technical knowledge of the internal operation of the system on which the cryptography is implemented. In particular, a power analysis attack involves obtaining information useful to the determination of a private key by observing properties of electricity in the power lines supplying hardware implementing the cryptosystem or by detecting electromagnetic emanations from the power lines or said hardware.

In a Simple Power Analysis (SPA) attack, an attacker monitors the power consumption of a device to visually identify large features of the generation of the public key $Q$ through the scalar multiplication operation, $kP$. Indeed, monitoring of the power consumption during a scalar multiplication operation may enable an attacker to recognize exact instructions as the instructions are executed. For example, consider that the difference between the power consumption for the execution of a point doubling ($D$) operation and power consumption for the execution of a point addition ($A$) operation is obvious. Then, by investigating one power trace of a complete execution of a double-and-add algorithm employed to perform a scalar multiplication, the bits of the scalar private key $k$ may be revealed. In particular, whenever a $D$ operation is followed by an $A$ operation, the corresponding bit $k_i$ =1, otherwise if a $D$ operation is followed by another $D$ operation, then $k_i$ = 0. A sequence of doubling and addition point operations is referred to as a $DA$ sequence.

In a Differential Power Analysis (DPA) side-channel attack, an attacker exploits the varying power consumed by a microprocessor while the microprocessor executes cryptographic program code. Using statistical analysis of the power consumption measurements of many runs of a given cryptographic algorithm, the attacker may infer information about a secret key used in the given cryptographic algorithm. A DPA attack on a scalar multiplication algorithm may be based on collecting hundreds of power consumption measurements obtained during the execution of the scalar multiplication with the same private key. Even if the execution is SPA-resistant, a statistical analysis on the measurements collected can still reveal the private key.

It would be desirable to obtain the result of an Elliptic Curve Scalar Multiplication operation using a split private key in a manner that resists revealing the private key to an attacker that employs a DPA attack. Furthermore, where the Elliptic Curve Scalar Multiplication operation employs integer division, it would be desirable to resist revealing the quotient of the integer division to an attacker that employs an SPA attack.

In the course of performing an Elliptic Curve Scalar Multiplication operation to determine a public cryptographic key, a main loop of an integer division operation may be performed in a manner that counters Simple Power Analysis attacks. Given that the integer division has a dividend and a divisor, both the divisor and the negative value of the divisor are stored. A carry bit from a previous iteration of the main loop determines which of the divisor or the negative of the divisor to use. The order of an addition operation and a shift left operations in the main loop is interchanged compared to a known integer division method. Advantageously, the interchange saves iterations at the beginning of the known integer division algorithm, which iterations may be attributed to a poor alignment of the dividend array and the divisor array.

In accordance with an aspect of the present application, there is provided, in the course of performing an Elliptic Curve Scalar Multiplication operation to determine a public cryptographic key, a method of performing a main loop of an integer division operation while countering Simple Power Analysis attacks, as recited in claim 1. In other aspects of the present application, a mobile communication device is provided for carrying out this method and a computer readable medium is provided for adapting a processor to carry out this method.

Other aspects and features will become apparent to those of ordinary skill in the art upon review of the following description of specific embodiments of the invention in conjunction with the accompanying figures.

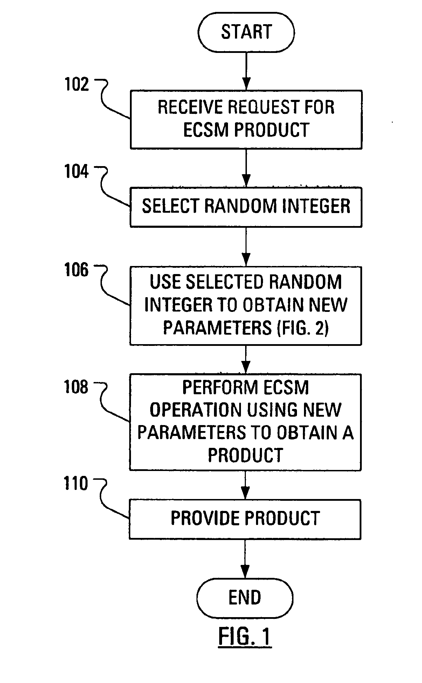

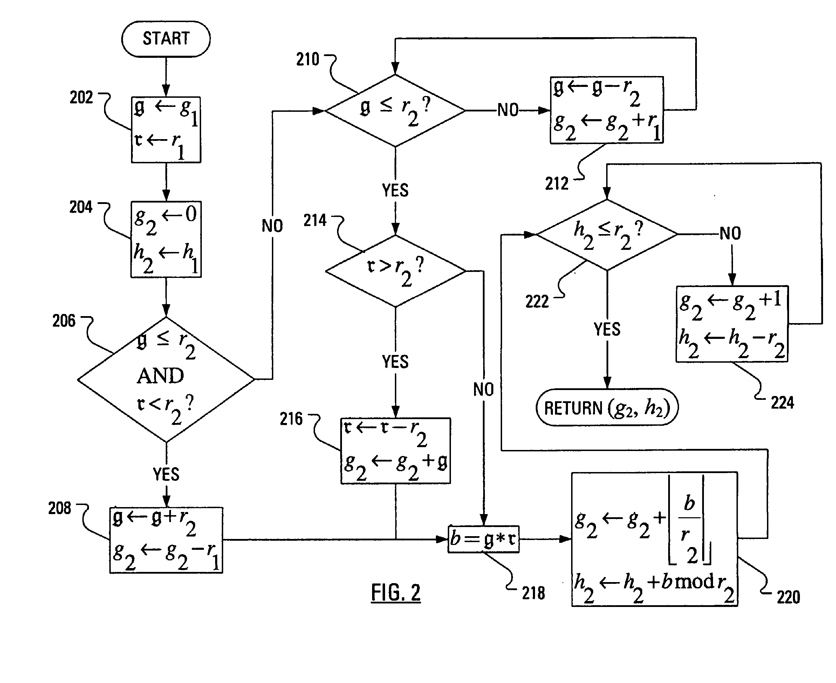

It has previously been suggested that, to avoid revealing the scalar to an attack on an Elliptic Curve Scalar Multiplication (ECSM) operation, i.e., $Q = kP$, the scalar, $k$, may be split into two or more parts. Example steps in an expanded ECSM operation are presented in FIG. 1, as part of a larger Elliptic Curve cryptosystem application. The ECSM is called "expanded" due to the extra steps involved in splitting the scalar. A processor executing instructions describing the expanded ECSM operation receives (step 102) a request for an ECSM product, e.g., a request for $Q = kP$. The processor selects (step 104) a random integer, $r$, and uses the random integer and a previous set of key-splitting parameters to determine (step 106) a new set of key-splitting parameters. An example of a key splitting algorithm is presented in FIG. 2 and described hereinafter. The processor then uses the new set of key-splitting parameters, in conjunction with the random integer and the base point, $P$, to perform (step 108) an ECSM operation. Upon completion of the ECSM operation, the processor provides (step 110) the product of the ECSM operation to the requesting application. In one instance, the product of the ECSM operation may be published as a public key in an Elliptic Curve cryptosystem.

In an example of key splitting, called "Additive Splitting Using Division", an $n$-bit scalar is split through the use of an $l$-bit random integer, $r$. In particular, the scalar is split by dividing the scalar by the random integer to obtain an integer quotient, multiplying the base point by the random integer to obtain an interim point, multiplying the interim point by the integer quotient and adding a product of the remainder of the division and the base point. That is,

$$kP = \left\lfloor \frac{k}{r} \right\rfloor rP + \left( k \bmod r \right) P. \qquad (0.4)$$

The bit length, $l$, of the random integer r may be chosen to be $l = \left\lceil \dfrac{n}{2} \right\rceil$. That is, $r$ is chosen uniformly at random from the range $[2^{l-1}, 2^{l}-1]$. Equation (0.4) can be rewritten as

$$kP = gS + hP, \qquad (0.5)$$

where $g$ is the integer quotient, $h$ is the remainder and $S = rP$ is the interim point. Hence, the bit length of $g$ is at most $\left\lfloor \dfrac{n}{2} \right\rfloor + 1 \leq l + 1$ and the bit length of $g$ is at least $l$ and the bit length of $h$ is at most $l$. The processor thus begins a determination of $kP$ by first performing an ECSM to determine the interim point $S$, where the scalar, $r$, is of a length half the length of $k$.

For additional security, it has previously been proposed to change the random integer, $r$, frequently. However, despite not using the scalar directly in performing ECSM operations with a split scalar, each time a new random integer is selected, key-splitting parameters used in each ECSM operation must be determined anew. Accordingly, in the Additive Splitting Using Division example, the processor determines the key-splitting parameter $g = \dfrac{k}{r}$ for each new $r$. Such determining of the key-splitting parameter for each change in the random integer, when subject to a Differential Power Analysis attack, can yield the value of $k$ to an attacker.

To mitigate against a Differential Power Analysis attack, it is proposed herein to determine parameters for use in key splitting algorithms using previously determined key-splitting parameters. Accordingly, when the scalar is not used repetitively, e.g., in operations for determining parameters that define a split scalar before determining the product of an ECSM operation, the likelihood of a Differential Power Analysis providing an attacker an indication of the scalar is reduced significantly.

In operation, where the splitting of the scalar is to use the Additive Splitting Using Division algorithm, the key-splitting parameters provided to the processor include a previously determined integer quotient, $g_1$, a previously determined remainder, $h_1$, the original random integer, $r_1$, used in the previous determination and the successive random integer, $r_2$, selected in step 104. It is proposed herein to determine a successive integer quotient, $g_2$, and a successive remainder, $h_2$, without the re-use of the scalar, $k$, thereby providing a countermeasure to a DPA attack. Given the original random integer used to generate the previous splitting parameters, the previous splitting parameters, and a successive random integer for generating successive splitting parameters, i.e., $r_1$, $g_1 = \left\lfloor \dfrac{k}{r_1} \right\rfloor$, $h_1 = k \bmod r_1$ and $r_2$, we want to find the new splitting parameters including a successive quotient, $g_2 = \left\lfloor \dfrac{k}{r_2} \right\rfloor$, and a successive remainder, $h_2 = k \bmod r_2$, without employing any operations that use $k$.

We introduce a temporary quotient, g, and a temporary random integer, r, for use in a method whose example steps are presented in FIG. 2. To begin, a processor initializes (step 202) the temporary quotient, g, and the temporary random integer, r, with the values of the original quotient and the original random integer, respectively, i.e., g ← $g_1$ and r ← $r_1$. Additionally, the processor initializes (step 204) the successive quotient, $g_2$, and the successive remainder, $h_2$. In particular, the successive quotient is assigned the value zero and the successive remainder is assigned the value of the original remainder, i.e., $g_2$ ← 0 and $h_2$ ← $h_1$.

The processor then compares (step 206) the temporary quotient to the successive random integer and compares the temporary random integer to the successive random integer. If the temporary quotient is less than, or equal to, the successive random integer and the temporary random integer is less than the successive random integer, the processor increases (step 208) the temporary quotient by the successive random integer and, additionally, decreases (step 208) the successive quotient by the original random integer.

If the successive random integer is less than the temporary quotient or the temporary random integer is greater than, or equal to, the successive random integer, the processor compares (step 210) the temporary quotient to the successive random integer. If the temporary quotient is greater than the successive random integer, the processor decreases (step 212) the temporary quotient by the value of the successive random integer and the processor increases (step 212) the successive quotient by the value of the original random integer. The processor then, again, compares (step 210) the temporary quotient to the successive random integer. If the temporary quotient is greater than the successive random integer, the processor decreases (step 212) the temporary quotient by the value of the successive random integer and the processor increases (step 212) the successive quotient by the value of the original random integer.

The processor, upon determining (step 210) that the temporary quotient is less than, or equal to, the successive random integer, compares (step 214) the temporary random integer to the successive random integer. If the temporary random integer is greater than the successive random integer, the processor decreases (step 216) the temporary random integer by the successive random integer and, additionally, increases (step 216) the successive quotient by the temporary quotient.

Subsequent to reassigning (step 216) the temporary random integer and the successive quotient or subsequent to determining (step 214) that the successive random integer is greater than, or equal to, the temporary random integer or subsequent to reassigning (step 208) the temporary quotient and the successive quotient, the processor determines (step 218) a value for a temporary product, $b$, of the temporary quotient and the temporary random integer.

The processor then increases (step 220) the successive quotient by an integer quotient wherein the temporary product is the dividend and the successive random integer is the divisor. The processor also increases the successive remainder by a temporary remainder determined as $b \bmod r_2$.

The processor then compares (step 222) the successive remainder to the successive random integer. If the successive remainder is greater than the successive random integer, the processor increases (step 224) the value of the successive quotient by one and, additionally, decreases (step 224) the successive remainder by the successive random integer. The processor then again compares (step 222) the successive remainder to the successive random integer. If the successive remainder is greater than the successive random integer, the processor increases (step 224) the value of the successive quotient by one and, additionally, decreases (step 224) the successive remainder by the successive random integer.

Upon determining (step 222) that the successive remainder is less than, or equal to, the successive random integer, the processor considers the method complete and considers that the successive quotient, $g_2$, and the successive remainder, $h_2$, have been determined.

The processor may then return the new key-splitting parameters, i.e., the successive quotient, $g_2$, and the

successive remainder, $h_2$, thereby allowing the processor to perform (step 108) the requested ECSM operation using the new key-splitting parameters, in conjunction with the base point, $P$. Advantageously, the new key-splitting parameters, $g_2$ and $h_2$, have been determined without re-use of the scalar, $k$, thereby providing a countermeasure to a DPA attack.

Note that the SPA information leaked from the method whose example steps are presented in FIG. 2 is not critical. As will be clear to a person of ordinary skill in the art, when implementing the method, the various paths may be balanced, through the use of dummy operations, to minimize information leakage. In practice, each comparison (steps 206, 210, 214, 222) may be replaced with a corresponding subtraction and sign verification. Also, to take advantage of available storage, the two's complement and the double of some values may be determined in advance and stored for subsequent use in the method whose example steps are presented in FIG. 2. Accordingly, the method whose example steps are presented in FIG. 2 may be performed using only addition operations and sign check operations besides the integer multiplication (step 218) and the integer division (step 220) operations.

To perform the perform the division operation, $\left\lfloor \dfrac{b}{r_2} \right\rfloor$, in step 220, using only addition operations and sign check operations, a non-restoring division algorithm may be used. Division algorithms suitable to this task in previous work (see, for example, M. Joye and K. Villegas, "A Protected Division Algorithm", Proceedings of the 5th Smart Card Research and Advanced Application Conference, pp. 59-68, The USENIX Association, 2002, hereinafter "Joye and Villegas") have assumed that the dividend and the divisor were not signed and kept track of the sign change separately.

Consider now that the dividend may be represented by an array of w-bit digits that contains at least one sign bit. Similarly, the divisor may also be represented by an array of w-bit digits that contains at least one sign bit. Upon completion of a division operation on such a dividend array and divisor array, the dividend array contains the remainder concatenated to the quotient.

Known integer division algorithms, such as the pencil-and-paper algorithm revisited in Joye and Villegas, include non-uniform iterations. That is, known bit-by-bit method steps involve a first branch having a first quantity and type of operations and a second branch having a second quantity and type of operations. Where the first branch is executed when a quotient bit is 0 and the second branch is executed when a quotient bit is 1, an SPA attack may reveal the quotient to an attacker.

Accordingly, it would be desirable to make the iterations of the division algorithm uniform so that simple power analysis attacks, or simple electromagnetic emanations attacks, do not reveal the bits of the resulting quotient.

Overall, the SPA-resistant integer division method described hereinafter receives, as input, a dividend array, $a$, of $u$ w-bit digits, and a divisor array, $b$, of $v$ w-bit digits, where $u > v$. The SPA-resistant integer division method described hereinafter produces, as output, a quotient, $q = \left\lfloor \dfrac{a}{b} \right\rfloor$, and a remainder, $r = a \bmod b$. Note that, while the SPA-resistant integer division method described hereinafter is presented in the context of the Additive Splitting Using Division algorithm, the SPA-resistant integer division method is valid for any application requiring integer division.

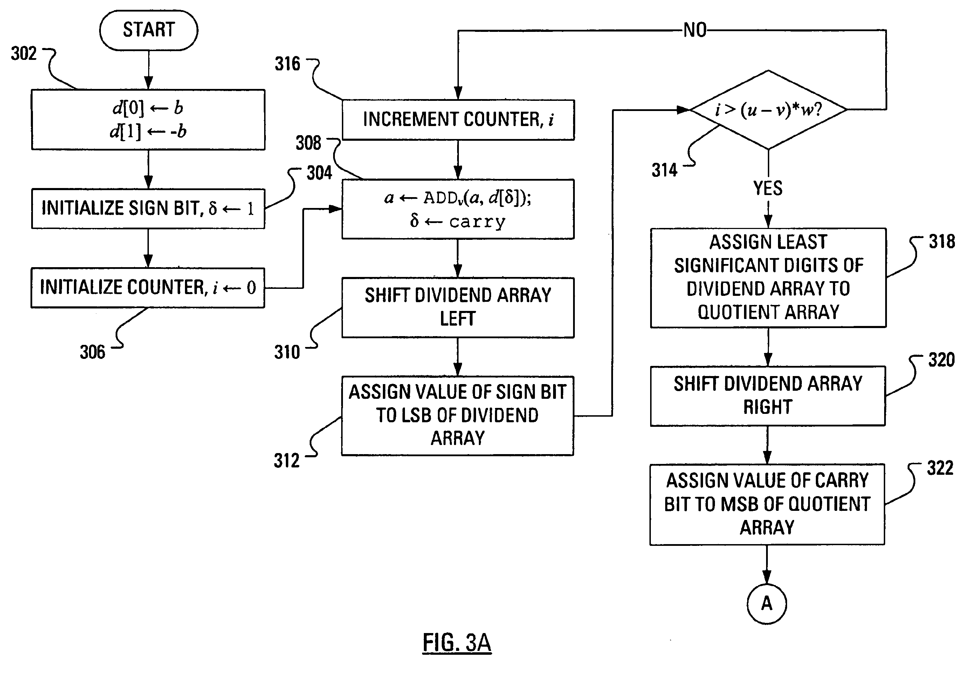

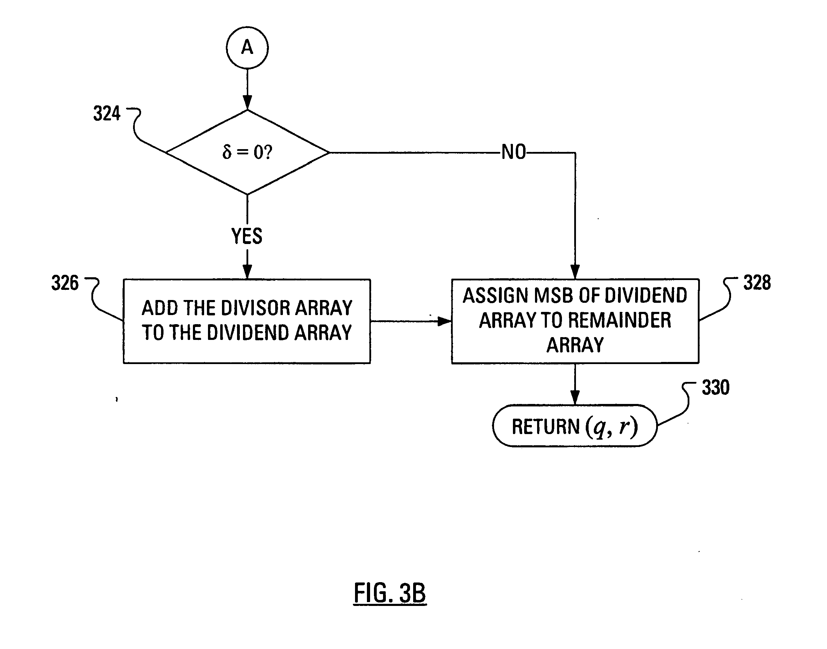

Example steps of an SPA-resistant integer division method are illustrated in FIGS. 3A and 3B. Initially, the processor assigns, to a first temporary array $d[0]$, the value of the divisor array $b$ and assigns, to a two's-complement-of-the-divisor array $d[1]$, the value of the two's complement of the divisor array $b$ (step 302). The processor initializes a sign bit, $\delta$, to 1 (step 304) and initializes a counter, $i$, to 0 (step 306). The processor replaces (step 308) the value of the dividend array $a$ by a value obtained by adding an augend array of the most significant $v$ digits from the dividend array $a$ to an addend array of $v$ digits of the two's-complement-of-the-divisor array $d[1]$. That is, in effect, the processor subtracts the divisor array $b$, of length $v$ digits, from the most significant $v$ digits of the dividend array $a$. The addition operation executed on the augend array and the addend array generates a carry bit. The processor also assigns (step 308) the carry bit to the sign bit. The processor then shifts (step 310) all $u$ digits of the dividend array $a$ left by one bit. The processor then assigns (step 312) the value of the sign bit to the least significant bit of the dividend array $a$. The processor then determines (step 314) whether the counter has exceeded a limit of $(u - v)*w$. If the counter has not exceeded the limit, the processor increments the counter (step 316) and repeats steps 308, 310, 312 and 314. If the counter has exceeded the limit, the processor assigns (step 318) the least significant $(u - v)$ digits of the dividend array $a$ to the quotient array $q$ of length $(u - v + 1)$ digits. The processor then shifts (step 320) the dividend array $a$ right by $v$ digits and assigns (step 322) the value of the carry bit to the most significant digit of the quotient array $q$. The processor then determines (step 324, see FIG. 3B) the value of the sign bit. Where the processor has determined (step 324) that the sign bit $\delta$ is 0, the processor replaces (step 326) the value of the dividend array $a$ by a value obtained by adding the most significant $v$ digits from the dividend array $a$ to $v$ digits of the first temporary array $d[1]$. That is, the processor adds the divisor array $b$ to the dividend array $a$. Subsequent to adding the divisor array $b$ to the dividend array $a$, or where the processor has determined (step 324) that the value of the sign bit $\delta$ is 1, the processor assigns (step 328) the most significant *v* digits of *a* to the remainder array *r*. Finally, the processor returns the quotient array *q* and the remainder array *r*, say, to step 220 of FIG. 2.

Note that, if there is only one sign bit in the divisor array *b*, then the shift right of the dividend array (step 320), which should shift with sign extension in any case, should shift-in the sign bit that was shifted out in step 310 or, equivalently, toggle the carry bit used in step 308 and use it as the sign bit that is shifted in.

It is notable that the algorithm proposed in Joye and Villegas is for a memory constrained environment. Accordingly, in the algorithm proposed in Joye and Villegas, the two's complement of the divisor array is computed and stored in the divisor array when needed. Otherwise, the two's complement of a dummy array is computed and stored in a dummy array. The address of a target register containing the array (i.e., either the divisor array or the dummy array) on which to perform the operation for obtaining the two's complement is determined by a sign bit and a carry bit from operations in a previous iteration. Notably, while attempting to conserve memory space, the algorithm proposed in Joye and Villegas still requires an extra (dummy) array on which the operation for obtaining the two's complement may be performed. It is proposed herein to store both the divisor and the two's complement of the divisor. Accordingly, in a main loop of the division algorithm (see steps 308, 310, 312 and 314 in FIG. 3A), the carry of the current addition operation, whether 0 or 1, determines whether the divisor or the two's complement of the divisor, respectively will be added in the subsequent iteration.

By way of modifications to the algorithm proposed in Joye and Villegas, the initial condition is that, when the most significant w-bit digit of the dividend and the most significant w-bit digit of the divisor are aligned, the most significant bit of the divisor is at a bit position at least as high as the most significant bit of the dividend. In the algorithm proposed in Joye and Villegas, the initial condition is that the most significant bit of the dividend should be at least one position higher than the most significant bit of the divisor.

Through such modifications, a step of prepending an extra 0 digit to the dividend array is, in some cases, avoided. Avoidance of the prepending step translates into a saving of w unnecessary shift left operations.

The algorithm proposed in Joye and Villegas contains a, possibly dummy, negation in the main loop. The method proposed herein does not include any negation operations in the main loop and still uses no more memory than the algorithm proposed in Joye and Villegas.

Additionally, the algorithm proposed in Joye and Villegas does not discuss array alignments since it deals with bit strings. It may be shown that the method proposed herein is valid in the case of bit strings as well as arrays.

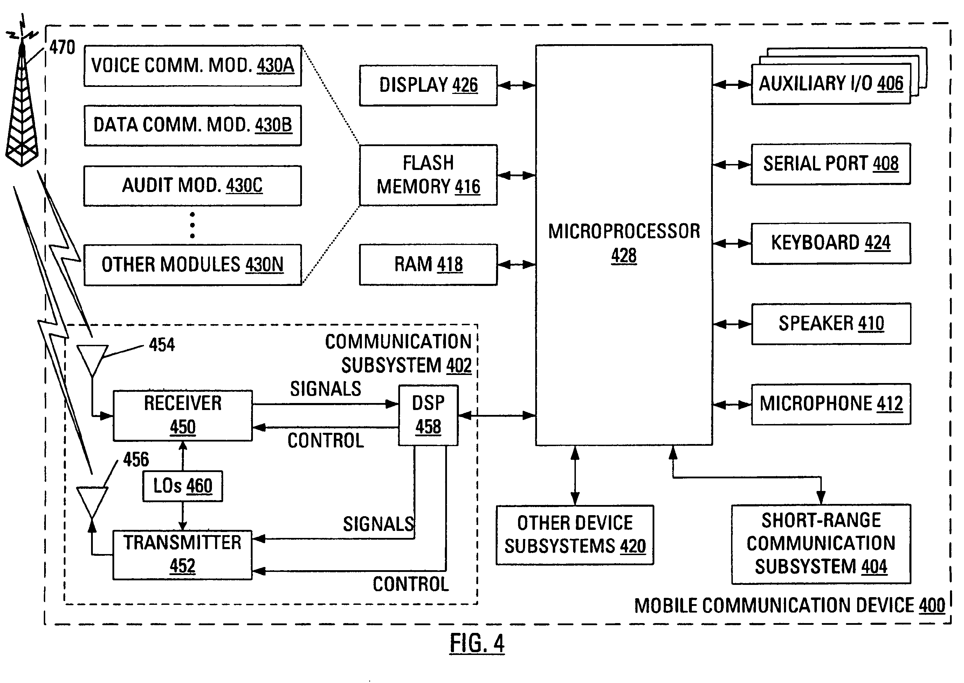

FIG. 4 illustrates a mobile communication device 400 as an example of a device that may carry out the method of FIG. 1. The mobile communication device 400 includes a housing, an input device (e.g., a keyboard 424 having a plurality of keys) and an output device (e.g., a display 426), which may be a full graphic, or full color, Liquid Crystal Display (LCD). In some embodiments, the display 426 may comprise a touchscreen display. In such embodiments, the keyboard 424 may comprise a virtual keyboard. Other types of output devices may alternatively be utilized. A processing device (a microprocessor 428) is shown schematically in FIG. 4 as coupled between the keyboard 424 and the display 426. The microprocessor 428 controls the operation of the display 426, as well as the overall operation of the mobile communication device 400, in part, responsive to actuation of the keys on the keyboard 424 by a user.

The housing may be elongated vertically, or may take on other sizes and shapes (including clamshell housing structures). Where the keyboard 424 includes keys that are associated with at least one alphabetic character and at least one numeric character, the keyboard 424 may include a mode selection key, or other hardware or software, for switching between alphabetic entry and numeric entry.

In addition to the microprocessor 428, other parts of the mobile communication device 400 are shown schematically in FIG. 4. These may include a communications subsystem 402, a short-range communications subsystem 404, the keyboard 424 and the display 426. The mobile communication device 400 may also include other input/output devices, such as a set of auxiliary I/O devices 406, a serial port 408, a speaker 410 and a microphone 412. The mobile communication device 400 may also include memory devices, including a flash memory 416 and a Random Access Memory (RAM) 418, and various other device subsystems 420. The mobile communication device 400 may comprise a two-way radio frequency (RF) communication device having voice and data communication capabilities. In addition, the mobile communication device 400 may have the capability to communicate with other computer systems via the Internet.

Operating system software executed by the microprocessor 428 may be stored in a computer readable medium, such as the flash memory 416, but may be stored in other types of memory devices, such as a read only memory (ROM) or similar storage element. In addition, system software, specific device applications, or parts thereof, may be temporarily loaded into a volatile store, such as the RAM 418. Communication signals received by the mobile device may also be stored to the RAM 418.

The microprocessor 428, in addition to its operating system functions, enables execution of software applications on the mobile communication device 400. A predetermined set of software applications that control basic device operations, such as a voice communications module 430A and a data communications module 430B, may be installed on the mobile communication device 400 during manufacture. A public key generation module 430C may also be installed on the mobile communication device 400 during manufacture, to implement aspects of the present disclosure. As well, additional software modules, illustrated as an other software module 430N, which may be, for instance, a PIM application, may be installed during manufacture. The PIM application may be capable of organizing and managing data items, such as e-mail messages, calendar events, voice mail messages, appointments and task items. The PIM application may also be capable of sending and receiving data items via a wireless carrier network 470 represented by a radio tower. The data items managed by the PIM application may be seamlessly integrated, synchronized and updated via the wireless carrier network 470 with the device user's corresponding data items stored or associated with a host computer system.

Communication functions, including data and voice communications, are performed through the communication subsystem 402 and, possibly, through the short-range communications subsystem 404. The communication subsystem 402 includes a receiver 450, a transmitter 452 and one or more antennas, illustrated as a receive antenna 454 and a transmit antenna 456. In addition, the communication subsystem 402 also includes a processing module, such as a digital signal processor (DSP) 458, and local oscillators (LOs) 460. The specific design and implementation of the communication subsystem 402 is dependent upon the communication network in which the mobile communication device 400 is intended to operate. For example, the communication subsystem 402 of the mobile communication device 400 may be designed to operate with the Mobitex™, DataTAC™ or General Packet Radio Service (GPRS) mobile data communication networks and also designed to operate with any of a variety of voice communication networks, such as Advanced Mobile Phone Service (AMPS), Time Division Multiple Access (TDMA), Code Division Multiple Access (CDMA), Personal Communications Service (PCS), Global System for Mobile Communications (GSM), Enhanced Data rates for GSM Evolution (EDGE), Universal Mobile Telecommunications System (UMTS), Wideband Code Division Multiple Access (W-CDMA), High Speed Packet Access (HSPA), etc. Other types of data and voice networks, both separate and integrated, may also be utilized with the mobile communication device 400.

Network access requirements vary depending upon the type of communication system. Typically, an identifier is associated with each mobile device that uniquely identifies the mobile device or subscriber to which the mobile device has been assigned. The identifier is unique within a specific network or network technology. For example, in Mobitex™ networks, mobile devices are registered on the network using a Mobitex Access Number (MAN) associated with each device and in DataTAC™ networks, mobile devices are registered on the network using a Logical Link Identifier (LLI) associated with each device. In GPRS networks, however, network access is associated with a subscriber or user of a device. A GPRS device therefore uses a subscriber identity module, commonly referred to as a Subscriber Identity Module (SIM) card, in order to operate on a GPRS network. Despite identifying a subscriber by SIM, mobile devices within GSM/GPRS networks are uniquely identified using an International Mobile Equipment Identity (IMEI) number.

When required network registration or activation procedures have been completed, the mobile communication device 400 may send and receive communication signals over the wireless carrier network 470. Signals received from the wireless carrier network 470 by the receive antenna 454 are routed to the receiver 450, which provides for signal amplification, frequency down conversion, filtering, channel selection, etc., and may also provide analog to digital conversion. Analog-to-digital conversion of the received signal allows the DSP 458 to perform more complex communication functions, such as demodulation and decoding. In a similar manner, signals to be transmitted to the wireless carrier network 470 are processed (e.g., modulated and encoded) by the DSP 458 and are then provided to the transmitter 452 for digital to analog conversion, frequency up conversion, filtering, amplification and transmission to the wireless carrier network 470 (or networks) via the transmit antenna 456.

In addition to processing communication signals, the DSP 458 provides for control of the receiver 450 and the transmitter 452. For example, gains applied to communication signals in the receiver 450 and the transmitter 452 may be adaptively controlled through automatic gain control algorithms implemented in the DSP 458.

In a data communication mode, a received signal, such as a text message or web page download, is processed by the communication subsystem 402 and is input to the microprocessor 428. The received signal is then further processed by the microprocessor 428 for output to the display 426, or alternatively to some auxiliary I/O devices 406. A device user may also compose data items, such as e-mail messages, using the keyboard 424 and/or some other auxiliary I/O device 406, such as a touchpad, a rocker switch, a thumb-wheel, a trackball, a touchscreen, or some other type of input device. The composed data items may then be transmitted over the wireless carrier network 470 via the communication subsystem 402.

In a voice communication mode, overall operation of the device is substantially similar to the data communication mode, except that received signals are output to a speaker 410, and signals for transmission are generated by a microphone 412. Alternative voice or audio I/O subsystems, such as a voice message recording subsystem, may also be implemented on the mobile communication device 400. In addition, the display 426 may also be utilized in voice communication mode, for example, to display the identity of a calling party, the duration of a voice call, or other voice call related information.

The short-range communications subsystem 404 enables communication between the mobile communication device 400 and other proximate systems or devices, which need not necessarily be similar devices. For example, the short-range communications subsystem may include an infrared device and associated circuits and components, or a Bluetooth™ communication module to provide for communication with similarly-enabled systems and devices.

The above-described embodiments of the present application are intended to be examples only. Alterations, modifications and variations may be effected to the particular embodiments by those skilled in the art without departing from the scope of the application, which is defined by the claims appended hereto.

**Claims**

1.  A cryptographic method of performing an Elliptic Curve Scalar Multiplication operation by Additive Splitting Using Division, arranged to be carried out on a mobile communication device (400), performing a main loop of an integer division operation in a manner to counter power analysis attacks, said main loop performed given a dividend stored in a dividend array, a divisor stored in a divisor array, a negative of said divisor stored in a negative divisor array, and a sign bit, said method comprising:

    selecting an addend array, from among said divisor array and said negative divisor array, based on a value of said sign bit;
    selecting an augend array based on said dividend array;
    adding (308), to said dividend array, said addend array to form a sum;
    storing said sum in said dividend array; and
    subsequent to said storing said sum, shifting (310) said dividend array left.

2.  The cryptographic method of claim 1 wherein said adding also forms a carry bit and said method further comprises assigning, to said sign bit, said carry bit.

3.  The cryptographic method of claim 1 further comprising, before performing said main loop:

    receiving said dividend;
    storing said dividend in said dividend array;
    receiving said divisor; and
    storing said divisor in said divisor array.

4.  The cryptographic method of claim 3 further comprising, before performing said main loop:

    determining a two's complement of said divisor; and
    storing said two's complement of said divisor in said negative divisor array.

5.  The cryptographic method of claim 1 further comprising, before performing said main loop, initializing said sign bit.

6.  A mobile communication device (400) for, in the course of performing an Elliptic Curve Scalar Multiplication operation by Additive Splitting Using Division, performing a main loop of an integer division operation in a manner that counters power analysis attacks, said device comprising:

    a memory storing a dividend in a dividend array, a divisor in a divisor array, a negative of said divisor in a negative divisor array and a sign bit; and
    a processor (428) configured to:

        select an addend array, from among said divisor array and said negative divisor array, based on a value of said sign bit;
        select an augend array based on said dividend array;
        add, to said dividend array, said addend array to form a sum;
        store said sum in said dividend array; and
        subsequent to said storing said sum, shift said dividend array left.

7.  The mobile communication device (400) of claim 6 wherein said adding to form said sum also forms a carry bit and said processor is further configured to assign, to said sign bit, said carry bit.

8.  The mobile communication device (400) of claim 6 wherein said processor (428) is further configured to, before performing said main loop:

receive said dividend;
store said dividend in said dividend array;
receive said divisor; and
store said divisor in said divisor array.

9. The mobile communication device (400) of claim 8 wherein said processor (428) is further configured to, before performing said main loop:

determine a two's complement of said divisor; and
store said two's complement of said divisor in said negative divisor array.

10. The mobile communication device (400) of claim 6 wherein said processor (428) is further configured to, before performing said main loop, initialize said sign bit.

11. A computer readable medium containing computer-executable instructions that, when executed on a processor given a dividend stored in a dividend array, a divisor stored in a divisor array, a negative of said divisor stored in a negative divisor array and a sign bit, cause said processor to perform an Elliptic Curve Scalar Multiplication operation by Additive Splitting Using Division including an integer division operation performed in a manner countering power analysis attacks, said instructions, in a main loop of said integer division operation in particular, causing said processor to perform the cryptographic method of any of claims 1 to 5.

**Patentansprüche**

1. Kryptographisches Verfahren zur Durchführung einer Elliptische-Kurve-Skalarmultiplikation(ECSM - Elliptic Curve Scalar Multiplication)-Operation durch "Additive Splitting Using Division", das ausgebildet ist zur Ausführung in einer mobilen Kommunikationsvorrichtung (400), das eine Hauptschleife einer Ganzzahldivisionsoperation auf eine Weise durchführt, die Leistungsanalyseangriffen entgegenwirkt, wobei die Hauptschleife durchgeführt wird mit einem Dividend, der in einem Dividend-Array gespeichert ist, einem Divisor, der in einem Divisor-Array gespeichert ist, einem Negativen des Divisors, der in einem Negativ-Divisor-Array gespeichert ist, und einem Vorzeichen-Bit, wobei das Verfahren aufweist:

Auswählen eines Addend-Arrays aus dem Divisor-Array und dem Negativ-Divisor-Array basierend auf einem Wert des Vorzeichen-Bits;
Auswählen eines Augend-Arrays basierend auf dem Dividend-Array;
Addieren (308) des Addend-Arrays zu dem Dividend-Array, um eine Summe zu bilden;
Speichern der Summe in dem Dividend-Array; und
nachfolgend auf das Speichern der Summe, Verschieben (310) des Dividend-Arrays nach links.

2. Kryptographisches Verfahren gemäß Anspruch 1, wobei das Addieren auch ein Übertrags-Bit bildet und das Verfahren weiter aufweist ein Zuweisen des Übertrags-Bit zu dem Vorzeichen-Bit.

3. Kryptographisches Verfahren gemäß Anspruch 1, das weiter aufweist, vor dem Durchführen der Hauptschleife:

Empfangen des Dividends;
Speichern des Dividends in dem Dividend-Array;
Empfangen des Divisors; und
Speichern des Divisors in dem Divisor-Array.

4. Kryptographisches Verfahren gemäß Anspruch 3, das weiter aufweist, vor dem Durchführen der Hauptschleife:

Bestimmen eines Zweier-Komplements des Divisors; und
Speichern des Zweier-Komplements des Divisors in dem Negativ-Divisor-Array.

5. Kryptographisches Verfahren gemäß Anspruch 1, das weiter aufweist, vor dem Durchführen der Hauptschleife, ein Initialisieren des Vorzeichen-Bits.

6. Mobile Kommunikationsvorrichtung (400) zum Durchführen, während einer Durchführung einer Elliptische-Kurve-Skalarmultiplikation(ECSM - Elliptic Curve Scalar Multiplication)-Operation durch "Additive Splitting Using Division", einer Hauptschleife einer Ganzzahldivisionsoperation auf eine Weise, die Leistungsanalyseangriffen entgegenwirkt, wobei die Vorrichtung aufweist:

   einen Speicher, der einen Dividend in einem Dividend-Array, einen Divisor in einem Divisor-Array, ein Negatives des Divisors in einem Negativ-Divisor-Array und ein Vorzeichen-Bit speichert; und
   einen Prozessor (428), der konfiguriert ist zum:

      Auswählen eines Addend-Arrays aus dem Divisor-Array und dem Negativ-Divisor-Array basierend auf einem Wert des Vorzeichen-Bits;
      Auswählen eines Augend-Arrays basierend auf dem Dividend-Array;
      Addieren des Addend-Arrays zu dem Dividend-Array, um eine Summe zu bilden;
      Speichern der Summe in dem Dividend-Array; und
      nachfolgend auf das Speichern der Summe, Verschieben des Dividend-Arrays nach links.

7. Mobile Kommunikationsvorrichtung (400) gemäß Anspruch 6, wobei das Addieren zum Bilden der Summe auch ein Übertrags-Bit bildet und der Prozessor weiter konfiguriert ist zum Zuweisen des Übertrags-Bit zu dem Vorzeichen-Bit.

8. Mobile Kommunikationsvorrichtung (400) gemäß Anspruch 6, wobei der Prozessor (428) weiter konfiguriert ist, vor dem Durchführen der Hauptschleife, zum:

   Empfangen des Dividends;
   Speichern des Dividends in dem Dividend-Array;
   Empfangen des Divisors; und
   Speichern des Divisors in dem Divisor-Array.

9. Mobile Kommunikationsvorrichtung (400) gemäß Anspruch 8, wobei der Prozessor (428) weiter konfiguriert ist, vor dem Durchführen der Hauptschleife, zum:

   Bestimmen eines Zweier-Komplements des Divisors; und
   Speichern des Zweier-Komplements des Divisors in dem Negativ-Divisor-Array.

10. Mobile Kommunikationsvorrichtung (400) gemäß Anspruch 6, wobei der Prozessor (428) weiter konfiguriert ist, vor dem Durchführen der Hauptschleife, zum Initialisieren des Vorzeichen-Bits.

11. Computerlesbares Medium, das computerausführbare Anweisungen enthält, die bei Ausführung auf einem Prozessor mit einem Dividend, der in einem Dividend-Array gespeichert ist, einem Divisor, der in einem Divisor-Array gespeichert ist, einem Negativen des Divisors, der in einem Negativ-Divisor-Array gespeichert ist, und einem Vorzeichen-Bit, den Prozessor veranlassen zum Durchführen einer Elliptische-Kurve-Skalarmultiplikation(ECSM - Elliptic Curve Scalar Multiplication)-Operation durch "Additive Splitting Using Division", einschließlich einer Ganzzahldivisionsoperation, die auf eine Weise durchgeführt wird, um Leistungsanalyseangriffen entgegen zu wirken, wobei die Anweisungen, insbesondere in einer Hauptschleife der Ganzzahldivisionsoperation, den Prozessor veranlassen zur Durchführung des kryptographischen Verfahrens gemäß einem der Ansprüche 1 bis 5.

## Revendications

1. Procédé cryptographique destiné à réaliser une opération de multiplication scalaire sur courbe elliptique par division avec fractionnement additif, conçu pour être exécuté sur un dispositif de communication mobile (400), réalisant une boucle principale d'une opération de division entière de sorte à contrer des attaques par analyse de la consommation de courant, ladite boucle principale étant réalisée compte tenu d'un dividende stocké dans un groupe de dividendes, d'un diviseur stocké dans un groupe de diviseurs, d'une valeur négative dudit diviseur stockée dans un groupe de diviseurs négatifs, et un bit de signe, ledit procédé comprenant le fait :

   de sélectionner un groupe de cumulateurs, parmi ledit groupe de diviseurs et ledit groupe de diviseurs négatifs, sur la base d'une valeur dudit bit de signe ;

de sélectionner un groupe de cumulandes sur la base dudit groupe de dividendes ;
d'ajouter (308), audit groupe de dividendes, ledit groupe de cumulateurs pour former une somme ;
de stocker ladite somme dans ledit groupe de dividendes ; et
de déplacer (310) ledit groupe de dividendes à gauche suite audit stockage de ladite somme.

2. Procédé cryptographique de la revendication 1, dans lequel ledit ajout forme également un bit de retenue et ledit procédé comprend en outre l'attribution, audit bit de signe, dudit bit de retenue.

3. Procédé cryptographique de la revendication 1, comprenant en outre, avant de réaliser ladite boucle principale, le fait :

de recevoir ledit dividende ;
de stocker ledit dividende dans ledit groupe de dividendes ;
de recevoir ledit diviseur ; et
de stocker ledit diviseur dans ledit groupe de diviseurs.

4. Procédé cryptographique de la revendication 3, comprenant en outre, avant de réaliser ladite boucle principale, le fait :

de déterminer un complément à deux dudit diviseur ; et
de stocker ledit complément à deux dudit diviseur dans ledit groupe de diviseurs négatifs.

5. Procédé cryptographique de la revendication 1, comprenant en outre, avant de réaliser ladite boucle principale, le fait d'initialiser ledit bit de signe.

6. Dispositif de communication mobile (400) destiné à réaliser, dans le cadre de la réalisation d'une opération de multiplication scalaire sur courbe elliptique par une division avec fractionnement additif, une boucle principale d'une opération de division entière de façon à contrer des attaques par analyse de la consommation de courant, ledit dispositif comprenant :

une mémoire stockant un dividende dans un groupe de dividendes, un diviseur dans un groupe de diviseurs, une valeur négative dudit diviseur dans un groupe de diviseurs négatifs et un bit de signe ; et
un processeur (428) configuré pour :

sélectionner un groupe de cumulateurs, parmi ledit groupe de diviseurs et ledit groupe de diviseurs négatifs, sur la base d'une valeur dudit bit de signe ;
sélectionner un groupe de cumulandes sur la base dudit groupe de dividendes ;
ajouter, audit groupe de dividendes, ledit groupe de cumulateurs afin de former une somme ;
stocker ladite somme dans ledit groupe de dividendes ; et
déplacer ledit groupe de dividendes à gauche suite audit stockage de ladite somme.

7. Dispositif de communication mobile (400) de la revendication 6, dans lequel ledit ajout pour former ladite somme forme également un bit de retenue et ledit processeur est en outre configuré pour attribuer, audit bit de signe, ledit bit de retenue.

8. Dispositif de communication mobile (400) de la revendication 6, dans lequel avant de réaliser ladite boucle principale, ledit processeur (428) est en outre configuré pour :

recevoir ledit dividende ;
stocker ledit dividende dans ledit groupe de dividendes ;
recevoir ledit diviseur ; et
stocker ledit diviseur dans ledit groupe de diviseurs.

9. Dispositif de communication mobile (400) de la revendication 8, dans lequel avant de réaliser ladite boucle principale, ledit processeur (428) est en outre configuré pour :

déterminer un complément à deux dudit diviseur ; et
stocker ledit complément à deux dudit diviseur dans ledit groupe de diviseurs négatifs.

10. Dispositif de communication mobile (400) de la revendication 6, dans lequel, avant de réaliser ladite boucle principale,

**EP 2 122 899 B1**

ledit processeur (428) est en outre configuré pour initialiser ledit bit de signe.

11. Support lisible par ordinateur contenant des instructions exécutables par ordinateur qui, lorsqu'elles sont exécutées sur un processeur auquel est fourni un dividende stocké dans un groupe de dividendes, un diviseur stocké dans un groupe de diviseurs, une valeur négative dudit diviseur stockée dans un groupe de diviseurs négatifs et un bit de signe, amènent ledit processeur à réaliser une opération de multiplication scalaire sur courbe elliptique par division avec fractionnement additif comportant une opération de division entière réalisée de manière à contrer des attaques par analyse de la consommation de courant, lesdites instructions, dans une boucle principale de ladite opération de division entière en particulier, amenant ledit processeur à mettre en oeuvre le procédé cryptographique de l'une des revendications 1 à 5.

**13**

START

102 — RECEIVE REQUEST FOR ECSM PRODUCT

104 — SELECT RANDOM INTEGER

106 — USE SELECTED RANDOM INTEGER TO OBTAIN NEW PARAMETERS (FIG. 2)

108 — PERFORM ECSM OPERATION USING NEW PARAMETERS TO OBTAIN A PRODUCT

110 — PROVIDE PRODUCT

END

FIG. 1

START

202 $g \leftarrow g_1$
$\mathfrak{r} \leftarrow r_1$

204 $g_2 \leftarrow 0$
$h_2 \leftarrow h_1$

206 $g \leq r_2$ AND $\mathfrak{r} < r_2$ ? — NO

YES

208 $g \leftarrow g + r_2$
$g_2 \leftarrow g_2 - r_1$

210 $g \leq r_2$ ? — NO → 212 $g \leftarrow g - r_2$
$g_2 \leftarrow g_2 + r_1$

YES

214 $\mathfrak{r} > r_2$ ? — NO

YES

216 $\mathfrak{r} \leftarrow \mathfrak{r} - r_2$
$g_2 \leftarrow g_2 + g$

218 $b = g * \mathfrak{r}$

220 $g_2 \leftarrow g_2 + \left\lfloor \dfrac{b}{r_2} \right\rfloor$
$h_2 \leftarrow h_2 + b \bmod r_2$

222 $h_2 \leq r_2$ ? — NO → 224 $g_2 \leftarrow g_2 + 1$
$h_2 \leftarrow h_2 - r_2$

YES

RETURN $(g_2, h_2)$

**FIG. 2**

START

302
$d[0] \leftarrow b$
$d[1] \leftarrow -b$

304
INITIALIZE SIGN BIT, $\delta \leftarrow 1$

306
INITIALIZE COUNTER, $i \leftarrow 0$

316
INCREMENT COUNTER, $i$

308
$a \leftarrow \mathrm{ADD}_v(a, d[\delta]);$
$\delta \leftarrow \texttt{carry}$

310
SHIFT DIVIDEND ARRAY LEFT

312
ASSIGN VALUE OF SIGN BIT TO LSB OF DIVIDEND ARRAY

NO

314
$i > (u - v)*w?$

YES

318
ASSIGN LEAST SIGNIFICANT DIGITS OF DIVIDEND ARRAY TO QUOTIENT ARRAY

320
SHIFT DIVIDEND ARRAY RIGHT

322
ASSIGN VALUE OF CARRY BIT TO MSB OF QUOTIENT ARRAY

A

FIG. 3A

324 — δ = 0?

A

NO

YES

326 — ADD THE DIVISOR ARRAY TO THE DIVIDEND ARRAY

328 — ASSIGN MSB OF DIVIDEND ARRAY TO REMAINDER ARRAY

330 — RETURN $(q, r)$

FIG. 3B

FIG. 4

VOICE COMM. MOD. 430A

DATA COMM. MOD. 430B

AUDIT MOD. 430C

OTHER MODULES 430N

DISPLAY 426

FLASH MEMORY 416

RAM 418

MICROPROCESSOR 428

AUXILIARY I/O 406

SERIAL PORT 408

KEYBOARD 424

SPEAKER 410

MICROPHONE 412

COMMUNICATION SUBSYSTEM 402

RECEIVER 450

SIGNALS

DSP 458

CONTROL

LOs 460

TRANSMITTER 452

SIGNALS

CONTROL

OTHER DEVICE SUBSYSTEMS 420

SHORT-RANGE COMMUNICATION SUBSYSTEM 404

MOBILE COMMUNICATION DEVICE 400

EP 2 122 899 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- A Protected Division Algorithm. **M. Joye ; K. Ville-gas.** Proceedings of the 5th Smart Card Research and Advanced Application Conference. The USENIX Association, 2002, 59-68